# FASCICULE DE BREVET EUROPEEN

(11) **EP 1 642 764 B1**
(45) Date de publication et mention de la délivrance du brevet: **11.11.2015**
(21) Numéro de dépôt: 05292005.5
(22) Date de dépôt: 27.09.2005
(51) Int. Cl.: B60L 11/18, B60L 11/12, H02J 7/00

(54) **Système de contrôle du fonctionnement de moyens de stockage d'énergie électrique de moyens de motorisation hybride**
Vorrichtung zur Regelung von Elektrischen Speichernmitteln von Hybridantriebmitteln
System for controlling the operation of electric energy storage means of hybrid propulsion means

(30) Priorité: 29.09.2004 FR 0410321
(43) Date de publication de la demande: 05.04.2006
(73) Titulaire: Peugeot Citroën Automobiles SA, 78140 Vélizy-Villacoublay (FR)
(72) Inventeur: Cluzel, Eric, 78550 Gressey (FR)

(56) Documents cités:
- FR-A- 2 720 561
- GB-A- 2 121 971
- US-A- 5 237 259
- US-A- 5 965 991

## Description

La présente invention concerne un système de contrôle du fonctionnement de moyens stockage d'énergie électrique de moyens motorisation hybride pour véhicule automobile.

Plus particulièrement, la présente invention concerne un système de ce type, comprenant des moyens de détermination de l'état de charge des moyens de stockage d'énergie électrique.

Dans un véhicule hybride, la traction du véhicule est réalisée alternativement par un moteur thermique et un moteur électrique. Le moteur électrique est alimenté par des moyens de stockage d'énergie électrique, par exemple constitués d'une batterie, qui sont rechargés par une génératrice entraînée par le moteur thermique.

Dans ce type de véhicule, les moyens de stockage d'énergie électrique sont un élément important dont l'état d'usure conditionne sensiblement le fonctionnement des moyens de motorisation. D'une manière générale, les moyens de stockage d'énergie électrique sont fragiles. En effet, une mauvaise utilisation de ceux-ci peut se traduire par une dégradation irréversible et sensible de leurs performances ce qui a pour conséquence un fonctionnement non satisfaisant des moyens de motorisation. Dans un tel cas, il est alors nécessaire de remplacer les moyens de stockage, ce qui est coûteux pour l'utilisateur du véhicule.

Le document US 5,965,991 décrit un système de contrôle du fonctionnement de moyens de stockage d'énergie électrique de moyens de motorisation hybride pour véhicule automobile avec les caractéristiques techniques du préambule de la revendication 1.

Le but de la présente invention est de résoudre ce problème en proposant un système qui maintient sensiblement l'état de charge des moyens de stockage d'énergie électrique dans une plage nominale d'états de charge, afin de minimiser la dégradation de leurs performances et prolonger leur durée de vie.

A cet effet, l'invention a pour objet un système de contrôle de moyens de stockage d'énergie électrique de moyens de motorisation hybride pour véhicule automobile, du type comprenant des moyens de détermination de l'état de charge des moyens de stockage d'énergie électrique, avec les charactéristiques techniques de la revendication indépendent 1.

Suivant des modes particuliers de réalisation, le système comporte une ou plusieurs des caractéristiques suivantes :
- les moyens de comparaison sont adaptés pour comparer l'état de charge des moyens de stockage d'énergie électrique à une plage prédéterminée d'états de charge faibles, et les moyens de limitation comprennent des moyens de limitation de décharge adaptés pour limiter la puissance de décharge des moyens de stockage d'énergie électrique lorsque l'état de charge de ceux-ci est compris dans la plage d'états de charge faibles ;
- les moyens de limitation de décharge sont adaptés pour limiter progressivement la puissance de décharge des moyens de stockage d'énergie électrique à mesure que l'état de charge de ceux-ci diminue ;
- les moyens de limitation de décharge sont adaptés pour limiter linéairement la puissance de décharge des moyens de stockage d'énergie électrique à mesure que l'état de charge de ceux-ci diminue ;
- les moyens de limitation de décharge sont adaptés pour couper la puissance de décharge des moyens de stockage d'énergie électrique lorsque l'état de charge de ceux-ci est sensiblement égal à la borne inférieure de la plage d'états de charge faibles ;
- la plage d'états de charge faibles est égale à *[α,δ]* où *δ* est une valeur prédéterminée vérifiant la relation *δ ≥ α + 0,2 × (β - α),* et *α* et *β* sont des états prédéterminés de charge minimal et maximal nominaux des moyens de stockage respectivement ;
- les moyens de limitation de charge sont adaptés pour limiter progressivement la puissance de charge des moyens de stockage d'énergie électrique à mesure que l'état de charge de ceux-ci augmente ;
- les moyens de limitation de charge sont adaptés pour limiter linéairement la puissance de charge des moyens de stockage d'énergie électrique à mesure que l'état de charge de ceux-ci augmente ;
- les moyens de limitation de charge sont adaptés pour couper la puissance de charge des moyens de stockage d'énergie électrique lorsque l'état de charge de ceux-ci est sensiblement égal à la borne supérieure de la plage d'états de charge élevés ; et
- la plage d'états de charge élevés est égale à *[σ,β]*, où *σ* est une valeur prédéterminée vérifiant la relation *σ ≤ β* - 0,05 × *(β - α*), et *α* et *β* sont des états prédéterminés de charge minimal et maximal nominaux des moyens de stockage respectivement.

L'invention sera mieux comprise à la lecture de la description qui va suivre, donnée uniquement à titre d'exemple, et faite en relation aux dessins annexés dans lesquels :
- la figure 1 est un diagramme schématique d'un système selon l'invention associé à des moyens de stockage d'énergie électrique de motorisation hybride pour véhicule automobile;
- la figure 2 est une courbe représentative de la limitation de la puissance de décharge des moyens de stockage d'énergie électrique mise en oeuvre par les moyens de décharge entrant dans la constitution du système de la figure 1 ; et
- la figure 3 est une courbe représentative de la limitation de la puissance de charge des moyens de stockage d'énergie électrique mise en oeuvre par les moyens de charge entrant dans la constitution du système de la figure 1.

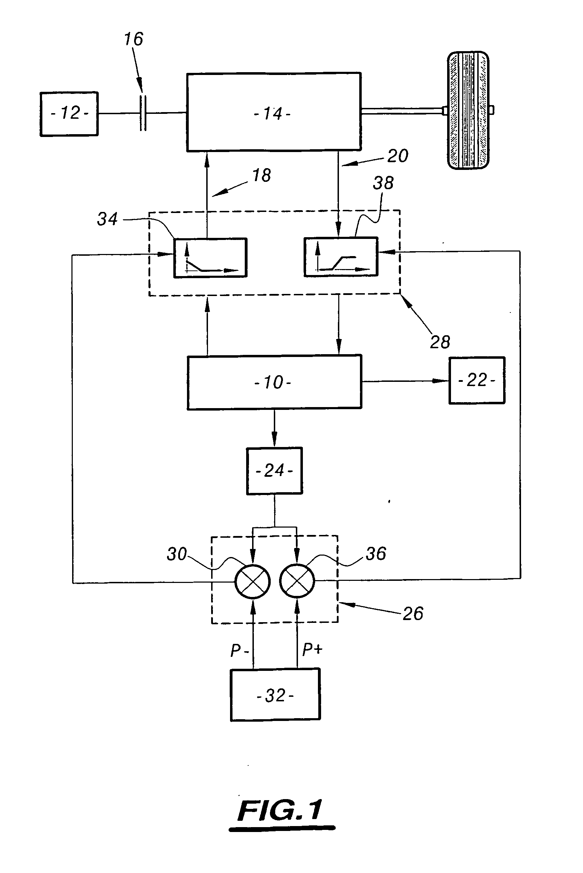

Sur la figure 1, on a représenté schématiquement un système de contrôle du fonctionnement de moyens 10 de stockage d'énergie électrique de moyens de motorisation hybride pour véhicule automobile

Les moyens de motorisation, par exemple du type présentant une architecture à un arbre, comprennent un moteur thermique 12 raccordés à des moyens 14 formant moteur-générateur par un embrayage piloté 16. Les moyens 14 formant moteur-générateur sont associés aux moyens 10 de stockage d'énergie électrique et sont adaptés pour fonctionner en moteur électrique ou en génératrice en fonction du type sélectionné de motorisation, électrique ou thermique, du véhicule, comme cela est connu de l'état de la technique.

Lorsque le type de motorisation sélectionné est la motorisation électrique, les moyens 10 de stockage se déchargent et fournissent, par des moyens d'alimentation électrique 18, de la puissance électrique aux moyens 14 formant moteur-générateur qui fonctionnent en moteur.

Par ailleurs, lorsque le type de motorisation sélectionné est la motorisation thermique, le moteur thermique 12 entraîne en rotation les moyens 14 formant moteur-générateur qui fonctionnent alors en génératrice. La puissance électrique ainsi générée est fournie aux moyens 10 de stockage pour leur recharge par des moyens 20 de charge.

Les moyens 10 de stockage sont en outre raccordés à un ensemble 22 prédéterminé d'organes fonctionnels du véhicule, comme par exemple l'éclairage, l'électronique de bord, ou autres, pour fournir à celui-ci de la puissance électrique en fonction des conditions de fonctionnement du véhicule.

Enfin, les moyens 10 de stockage sont raccordés à des moyens 24 de détermination de leur état de charge, ci-après désigné EC, adaptés pour déterminer régulièrement, périodiquement ou de manière continue, cet état de charge, par exemple pour des besoins de surveillance de celui-ci.

L'usure subie par les moyens 10 de stockage d'énergie électrique est minimale lorsque leur état de charge est compris dans une plage prédéterminée nominale d'états de charge *[α,β]* , où *α* et *β* sont les bornes inférieure et supérieure de cette plage respectivement.

Afin de prolonger un niveau de performances élevé des moyens 10 de stockage et donc leur durée de vie, le système de contrôle du fonctionnement des moyens 10 de stockage selon l'invention comprend des moyens 26 de comparaison adaptés pour comparer l'état de charge des moyens 10 de stockage à des plages prédéterminées d'états de charge représentatives d'états de charges faibles ou élevés, comme cela sera expliqué plus en détail par la suite.

Le système de contrôle comprend également des moyens 28 de limitation, associés aux moyens d'alimentation 18 et aux moyens 20 de charge, adaptés pour limiter la puissance électrique que les moyens 10 de stockage échangent avec leur environnement, c'est-à-dire les moyens 14 formant moteur-générateur et l'ensemble 22 d'organes fonctionnels du véhicule, lorsque l'état de charge des moyens 10 de stockage est compris dans l'une de ces plages. Ainsi, les moyens de limitation sont propres à s'opposer au fait que les moyens de stockage soient déchargés et/ou chargés de manière exagérée.

Les moyens 26 de comparaison comprennent des premiers moyens 30 de comparaison adaptés pour comparer l'état de charge, déterminé par les moyens 24 de détermination, à une plage prédéterminée d'états de charge faibles, ci-après désigné P-. La plage P- est mémorisée dans des moyens 32 de mémorisation du système de contrôle et est de manière avantageuse égale à la plage [*α,δ*] où *δ* est une valeur prédéterminée vérifiant par exemple la relation *δ ≥ α* + 0,2 x *(β―α) .*

Ces premiers moyens de comparaison sont par ailleurs raccordés à des moyens 34 de limitation de décharge. Les moyens 34 de limitation de décharge sont propres à limiter la puissance de décharge des moyens 10 de stockage en fonction des résultats de la comparaison des premiers moyens de comparaison, comme cela sera expliqué plus en détail par la suite.

Les moyens 26 de comparaison comprennent également des seconds moyens 36 de comparaison adaptés pour comparer l'état de charge des moyens 10 de stockage, déterminé par les moyens 24 de détermination, à une plage prédéterminée d'état de charge élevés, ci-après désigné P+, également mémorisée dans les moyens 32 de mémorisation. De manière avantageuse, cette plage P+ est égale à la plage *[α, β]* où *σ* est une valeur prédéterminée vérifiant par exemple la relation*σ ≤ β* - 0,05 x (*β - α ).*

II est à noter que la plage P+ et la plage P- peuvent être distinctes ou non et que le choix des valeurs de *δ* et σ dépend du type de moyens de stockage et du type de moyens de motorisation du véhicule.

Les seconds moyens 36 de comparaison sont par ailleurs raccordés à des moyens 38 de limitation en charge. Ces derniers sont adaptés pour limiter la puissance de charge des moyens 10 de stockage en fonction des résultats de la comparaison des seconds moyens de comparaison, comme cela sera également expliqué plus en détail par la suite.

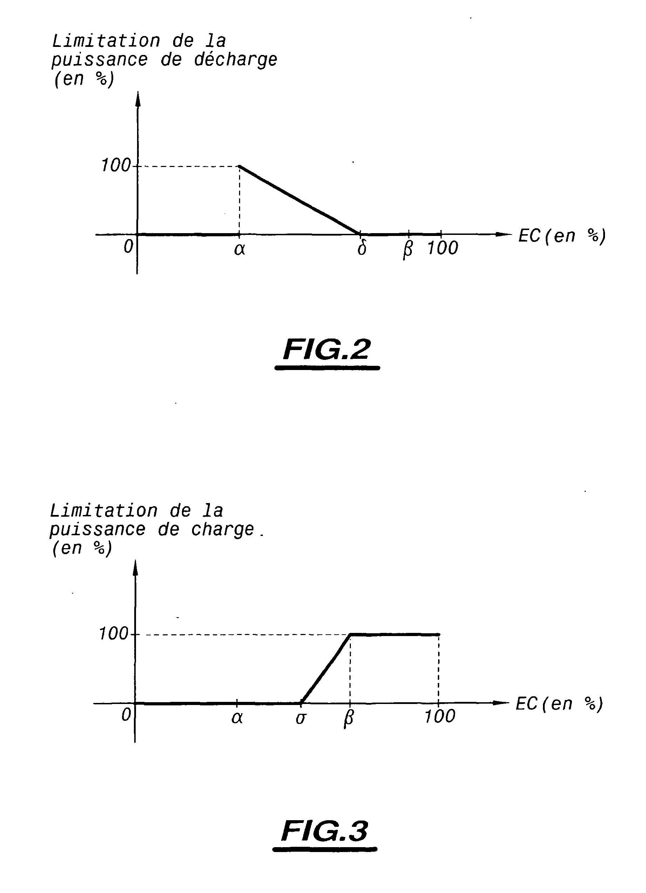

Il est décrit ci-après la structure et le fonctionnement des moyens de limitation de décharge et de charge en relation avec les figures 2 et 3.

La figure 2 représente la limitation de la puissance de décharge mise en oeuvre par les moyens 34 de limitation de décharge en fonction de l'état de charge EC des moyens 10 de stockage. L'état de charge EC est exprimé en pourcentage de l'état de charge maximal des moyens 10 de stockage. La limitation en puissance de décharge est quant à elle exprimée en pourcentage de la limitation maximale de puissance de décharge pour laquelle aucun courant ne circule dans les moyens 18 d'alimentation, ce qui correspond à un état de coupure de la puissance de décharge.

Lorsque l'état de charge des moyens 10 de stockage est déterminé comme supérieur à *δ* par les premiers moyens 30 de comparaison, les moyens 34 de limitation en décharge ne limitent pas la puissance de décharge des moyens 10 de stockage, de sorte que ceux-ci peuvent délivrer sans restriction la puissance électrique demandée par les moyens formant moteur-générateur et l'ensemble 22 d'organes fonctionnels.

Lorsque les premiers moyens 30 de comparaison déterminent que l'état de charge appartient à la plage P- [α,δ]*,* les moyens 34 de limitation de décharge mettent en oeuvre une limitation de la puissance de décharge. Comme illustré sur la figure 2, cette limitation augmentent progressivement en fonction des valeurs décroissances de l'état de charge EC, depuis une limitation nulle pour l'état de charge sensiblement égal à *δ* jusqu'à une limitation totale de la puissance de décharge, c'est-à-dire une coupure de celle-ci, pour l'état de charge sensiblement égal à *α* .

Cette limitation progressive est réalisée par exemple de manière linéaire et est particulièrement avantageuse pour minimiser la sensation, perçue par un utilisateur du véhicule, d'une diminution de la traction du véhicule par les moyens formant moteur-générateur en raison de la baisse de la puissance électrique disponible dans les moyens 10 de stockage.

Il est à noter que d'autres types de limitations progressives peuvent être utilisés, comme par exemple une limitation exponentielle, polynomiale d'ordre supérieur à 1, etc...

Enfin, lorsque l'état de charge des moyens 10 de stockage est déterminé comme inférieur à *α* par les premiers moyens 30 de comparaison, les moyens 34 de limitation de décharge limitent totalement la puissance de décharge.

Comme il est possible de le constater, les moyens de limitation en décharge sont adaptés pour minimiser le risque que les moyens 10 de stockage présentent un état de charge inférieur à *α* et subissent de ce fait des dégradations de leurs performances, de sorte que les moyens de stockage présentent une durée de vie optimisée.

La figure 3 représente, d'une manière analogue à la figure 2, la limitation de la puissance de charge des moyens 10 de stockage mise en oeuvre par les moyens 38 de limitation de charge en fonction de l'état de charge EC.

Lorsque l'état de charge des moyens 10 de stockage est déterminé comme inférieur à σ par les seconds moyens 36 de comparaison, les moyens 38 de limitation de charge ne limitent pas la puissance de charge, de sorte que les moyens 10 de stockage peuvent recevoir sensiblement la totalité de l'énergie produite par les moyens 14 formant moteur-générateur lorsque ceux-ci fonctionnent en génératrice.

Lorsque les seconds moyens 36 de comparaison déterminent que l'état de charge des moyens 10 de stockage appartient à la plage P+ [*σ,β*], les moyens 38 de limitation de charge mettent en oeuvre une limitation de la puissance de charge. Comme cela est illustré sur la figure 3, cette limitation augmente progressivement en fonction des valeurs croissances de l'état de charge EC, depuis une limitation nulle pour l'état de charge sensiblement égal à σ , jusqu'à une limitation totale de la puissance de charge, c'est-à-dire une coupure de celle-ci, pour l'état de charge sensiblement égal à *β*.

Cette limitation progressive de la puissance de charge est réalisée par exemple linéairement, ce qui permet notamment d'éviter d'appliquer des contraintes trop importantes aux moyens 10 de stockage.

Les moyens 36 de limitation de charge peuvent également mettre en oeuvre d'autres types de limitations progressives, comme par exemple une limitation exponentielle, polynomiale d'ordre supérieur à 1, etc...

Enfin, lorsque l'état de charge des moyens 10 de stockage est déterminé comme supérieur à *β* par les seconds 36 moyens de comparaison, les moyens 38 de limitation de charge coupent la puissance de charge, de sorte que les moyens 10 de stockage ne peuvent pas être chargés au-delà de leur état de charge nominal maximal *β* pendant le fonctionnement des moyens de motorisation, ce qui optimise en conséquence leur durée de vie.

Les moyens 26 de comparaison aux plages prédéterminées d'états de charge faibles et élevés ainsi que les moyens 28 de limitation de puissance peuvent par exemple comprendre une table de correspondance mémorisée dans les moyens 32 de mémorisation et ayant comme entrée l'état de charge déterminé par les moyens 24 de détermination et délivrant en sortie la valeur de la limitation de puissance échangée par les moyens 10 de stockage.

Ils peuvent également être intégrés directement aux moyens 10 de stockage d'énergie électrique ou mis en oeuvre sur un circuit câblé spécialement prévu à cet effet.

Il vient d'être décrit un système selon l'invention appliqué à des moyens de motorisation présentant une architecture à un arbre. Le système selon l'invention peut également être appliqué à d'autres types d'architectures de moyens de motorisation hybride, comme par exemple une architecture à double arbre de type classique.

Bien entendu d'autres modes de réalisation du système selon l'invention sont possibles.

Un autre mode de réalisation de l'invention consiste à utiliser uniquement les premiers moyens 30 de comparaison et les moyens 34 de limitation en décharge, de sorte qu'un contrôle du fonctionnement des moyens 10 de stockage est uniquement réalisé pour les états de charge faibles.

D'une manière analogue, il est possible d'utiliser uniquement les seconds moyens 36 de comparaison et les moyens 38 de limitation en charge pour uniquement réaliser un contrôle du fonctionnement des moyens de stockage pour les états de charge élevés.

Un autre mode de réalisation consiste à déterminer une limitation en puissance de décharge et/ou une limitation en puissance de charge qui ne soit totale lorsque l'état de charge des moyens 10 de stockage est égal à α ou *β*.

## Revendications

1. Système de contrôle du fonctionnement de moyens (10) de stockage d'énergie électrique de moyens de motorisation hybride pour véhicule automobile, du type comprenant des moyens (24) de détermination de l'état de charge des moyens (10) de stockage d'énergie électrique, le système comprenant
- des moyens (26) de comparaison de l'état de charge des moyens (10) de stockage d'énergie électrique à au moins une plage prédéterminée d'états de charge ; et
- des moyens (28) de limitation de la puissance électrique échangée par les moyens de stockage d'énergie électrique lorsque leur état de charge est compris dans la au moins une plage prédéterminée d'états de charge, **caractérisé en ce que** :
- les moyens (26) de comparaison sont adaptés pour comparer l'état de charge des moyens de stockage d'énergie électrique à une plage prédéterminée d'états de charge élevés (P+) dont la borne supérieure (β) coïncide avec la borne supérieure d'une plage prédéterminée nominale d'état de charge pour laquelle l'usure subie par lesdits moyens de stockage est minimale, plage délimitée par une valeur inférieure et une valeur supérieure; et
- **en ce que** les moyens (28) de limitation comprennent des moyens (38) de limitation de charge adaptés pour limiter la puissance de charge des moyens (10) de stockage d'énergie électrique lorsque l'état de charge de ceux-ci est compris dans ladite plage d'états de charge élevés.

2. Système selon la revendication 1, **caractérisé en ce que** les moyens (34) de limitation de charge sont adaptés pour limiter progressivement la puissance de charge des moyens (10) de stockage d'énergie électrique à mesure que l'état de charge de ceux-ci augmente.

3. Système selon la revendication 2,, **caractérisé en ce que** les moyens (38) de limitation de charge sont adaptés pour limiter linéairement la puissance de charge des moyens (10) de stockage d'énergie électrique à mesure que l'état de charge de ceux-ci augmente.

4. Système selon la revendication 1, 2 ou 3, **caractérisé en ce que** les moyens (38) de limitation de charge sont adaptés pour couper la puissance de charge des moyens (10) de stockage d'énergie électrique lorsque l'état de charge de ceux-ci est sensiblement égal à la borne supérieure de la plage d'états de charge élevés.

5. Système selon l'une quelconque des revendications 1 à 4, **caractérisé en ce que** la plage d'états de charge élevés est égale à [σ, β], où σ est une valeur prédéterminée vérifiant la relation σ ≤ β -0,05×(β -α), et α et β sont des états prédéterminés de charge minimal et maximal nominaux des moyens (10) de stockage respectivement.

6. Système selon la revendication 1, **caractérisé en ce que** les moyens (26) de comparaison sont adaptés pour comparer l'état de charge des moyens de stockage d'énergie électrique à une plage prédéterminée d'états de charge faibles, et **en ce que** les moyens (28) de limitation comprennent des moyens (34) de limitation de décharge adaptés pour limiter la puissance de décharge des moyens de stockage d'énergie électrique lorsque l'état de charge de ceux-ci est compris dans la plage d'états de charge faibles.

7. Système selon la revendication 6, **caractérisé en ce que** les moyens (34) de limitation de décharge sont adaptés pour limiter progressivement la puissance de décharge des moyens (10) de stockage d'énergie électrique à mesure que l'état de charge de ceux-ci diminue.

8. Système selon la revendication 7, **caractérisé en ce que** les moyens (34) de limitation de décharge sont adaptés pour limiter linéairement la puissance de décharge des moyens (10) de stockage d'énergie électrique à mesure que l'état de charge de ceux-ci diminue.

9. Système selon la revendication 6, 7 ou 8, **caractérisé en ce que** les moyens (34) de limitation de décharge sont adaptés pour couper la puissance de décharge des moyens (10) de stockage d'énergie électrique lorsque l'état de charge de ceux-ci est sensiblement égal à la borne inférieure de la plage d'états de charge faibles.

10. Système selon l'une quelconque des revendications 6 à 9, **caractérisé en ce que** la plage d'états de charge faibles est égale à [α,δ] où δ est une valeur prédéterminée vérifiant la relation δ ≥ α + 0,2 × (β -α), et α et β sont des états prédéterminés de charge minimal et maximal nominaux des moyens (10) de stockage respectivement.

## Patentansprüche

1. System zur Steuerung des Funktionierens von Mitteln (10) zum Speichern elektrischer Energie von Hybridantriebsmitteln für Kraftfahrzeug des Typs, der Mittel (24) zum Bestimmen des Ladezustands der Speichermittel (10) elektrischer Energie umfasst, wobei das System Folgendes umfasst
- Mittel (46) zum Vergleichen des Ladezustands der Speichermittel (10) elektrischer Energie mit mindestens einem vorbestimmten Bereich von Ladezuständen, und
- Mittel (28) zum Einschränken der elektrischen Leistung, die von den Speichermitteln elektrischer Energie ausgetauscht wird, wenn ihr Ladezustand in dem mindestens einen vorbestimmten Bereich von Ladezuständen liegt, **dadurch gekennzeichnet, dass**
- die Vergleichsmittel (46) angepasst sind, um den Ladezustand der Speichermittel elektrischer Energie mit einem vorbestimmten Bereich hoher Ladezustände (P+) zu vergleichen, deren oberes Limit (β) mit dem oberen Limit eines vorbestimmten Nennladezustandsbereichs übereinstimmt, für den die von den Speichermitteln erfahrene Abnutzung minimal ist, wobei der Bereich von einem unteren und einem oberen Wert abgegrenzt ist, und
- dass die Einschränkungsmittel (28) Ladeeinschränkungsmittel (38) umfassen, die angepasst sind, um die Ladeleistung der Speichermittel (10) elektrischer Energie einzuschränken, wenn ihr Ladezustand in dem Bereich hoher Ladezustände liegt.

2. System nach Anspruch 1, **dadurch gekennzeichnet, dass** die Ladeeinschränkungsmittel (34) angepasst sind, um die Ladeleistung der Speichermittel (10) elektrischer Energie allmählich im Laufe der Erhöhung ihres Ladezustands einzuschränken.

3. System nach Anspruch 1, **dadurch gekennzeichnet, dass** die Ladeeinschränkungsmittel (38) angepasst sind, um die Ladeleistung der Speichermittel (10) elektrischer Energie im Laufe der Erhöhung ihres Ladezustands linear einzuschränken.

4. System nach Anspruch 1, 2 oder 3, **dadurch gekennzeichnet, dass** die Ladeeinschränkungsmittel (38) angepasst sind, um die Ladeleistung der Speichermittel (10) elektrischer Energie abzuschalten, wenn ihr Ladezustand im Wesentlichen gleich der oberen Grenze des Bereichs hoher Ladezustände ist.

5. System nach einem der Ansprüche 1 bis 4, **dadurch gekennzeichnet, dass** der Bereich hoher Ladezustände gleich [σ, β] ist, wobei σ ein vorbestimmter Wert ist, der die Beziehung σ ≤ β - 0,05 x (β - α) erfüllt, und α und β jeweils vorbestimmte minimale und maximale Nennladezustände der Speichermittel (10) sind.

6. System nach Anspruch 1, **dadurch gekennzeichnet, dass** die Vergleichsmittel (26) angepasst sind, um den Ladezustand der Speichermittel elektrischer Energie mit einem vorbestimmten Bereich schwacher Ladezustände zu vergleichen, und dass die Einschränkungsmittel (28) Entladeeinschränkungsmittel (34) umfassen, die angepasst sind, um die Entladeleistung der Speichermittel elektrischer Energie einzuschränken, wenn ihr Ladezustand in dem Bereich schwacher Ladezustände liegt.

7. System nach Anspruch 6, **dadurch gekennzeichnet, dass** die Entladeeinschränkungsmittel (34) angepasst sind, um die Entladeleistung der Speichermittel (10) elektrischer Energie allmählich im Laufe des Sinkens ihres Ladezustands einzuschränken.

8. System nach Anspruch 7, **dadurch gekennzeichnet, dass** die Entladeeinschränkungsmittel (34) angepasst sind, um die Entladeleistung der Speichermittel (10) elektrischer Energie im Laufe des Sinkens ihres Entladezustands allmählich linear einzuschränken.

9. System nach Anspruch 6, 7 oder 8, **dadurch gekennzeichnet, dass** die Entladeeinschränkungsmittel (34) angepasst sind, um die Entladeleistung der Speichermittel (10) elektrischer Energie abzuschalten, wenn ihr Ladezustand im Wesentlichen gleich dem unteren Limit des Bereichs schwacher Ladezustände ist.

10. System nach einem der Ansprüche 6 bis 9, **dadurch gekennzeichnet, dass** der Bereich niedriger Ladezustände gleich [α, δ] ist, wobei δ ein vorbestimmter Wert ist, der die Beziehung δ ≥ α +0,2 x (β - α) erfüllt, und α und β jeweils vorbestimmte minimale und maximale Nennladezustände der Speichermittel (10) sind.

## Claims

1. A system for controlling the operation of electric energy storage means (10) of hybrid propulsion means for a motor vehicle, of the type including means (24) for determining the charge status of the electric energy storage means (10), the system including
- means (26) for comparison of the charge status of the electric energy storage means (10) to at least one predetermined range of charge statuses; and
- means (28) for limiting the electric power exchanged by the electric energy storage means when their charge status is comprised in the at least one predetermined range of charge statuses, **characterized in that**
- the comparison means (26) are adapted to compare the charge status of the electric energy storage means to a predetermined range of high charge statuses (P+), the upper limit (β) of which coincides with the upper limit of a nominal predetermined range of charge status for which the wear undergone by said storage means is minimal, said range delimited by a lower value and an upper value; and
- **in that** the limitation means (28) include charge limitation means (38) adapted to limit the charge power of the electric energy storage means (10) when the charge status thereof is comprised in said range of high charge statuses.

2. The system according to Claim 1, **characterized in that** the charge limitation means (34) are adapted to progressively limit the charge power of the electric energy storage means (10) as the charge status thereof increases.

3. The system according to Claim 2, **characterized in that** the charge limitation means (38) are adapted to linearly limit the charge power of the electric energy storage means (10) as the charge status thereof increases.

4. The system according to Claim 1, 2 or 3, **characterized in that** the charge limitation means (38) are adapted to cut off the charge power of the electric energy storage means (10) when the charge status thereof is substantially equal to the upper limit of the range of high charge statuses.

5. The system according to any one of Claims 1 to 4, **characterized in that** the range of high charge statuses is equal to [σ, β], where σ is a predetermined value verifying the relationship σ ≤ β - 0,05 x (β - α), and α and β are nominal minimum and maximum predetermined charge statuses of the storage means (10) respectively.

6. The system according to Claim 1, **characterized in that** the comparison means (26) are adapted to compare the charge status of the electric energy storage means to a predetermined range of low charge statuses, and **in that** the limitation means (28) include discharge limitation means (34) adapted to limit the discharge power of the electric energy storage means when the charge status thereof is comprised in the range of low charge statuses.

7. The system according to Claim 6, **characterized in that** the discharge limitation means (34) are adapted to progressively limit the discharge power of the electric energy storage means (10) as the charge status thereof reduces.

8. The system according to Claim 7, **characterized in that** the discharge limitation means (34) are adapted to linearly limit the discharge power of the electric energy storage means (10) as the charge status thereof reduces.

9. The system according to Claim 6, 7 or 8, **characterized in that** the discharge limitation means (34) are adapted to cut off the discharge power of the electric energy storage means (10) when the charge status thereof is substantially equal to the lower limit of the range of low charge statuses.

10. The system according to any one of Claims 6 to 9, **characterized in that** the range of low charge statuses is equal to [α, δ], where δ is a predetermined value verifying the relationship δ ≥ α +0,2 x (β - α), and α and β are nominal minimum and maximum predetermined charge statuses of the storage means (10) respectively.
